# EUROPÄISCHE PATENTANMELDUNG

(11) **EP 3 709 064 A1**
(43) Veröffentlichungstag der Anmeldung: **16.09.2020**
(21) Anmeldenummer: 20160590.4
(22) Anmeldetag: 03.03.2020
(51) Int. Cl.: G02B 6/44, H04B 10/80

(54) **VERFAHREN ZUM ANSCHLIESSEN EINES GEBÄUDES AN EIN GLASFASERNETZ**

(30) Priorität: 15.03.2019 DE 102019106679
(71) Anmelder: EWE TEL GmbH, 26133 Oldenburg (DE)
(72) Erfinder: Dreikandt, Dirk, 26215 Wiefelstede (DE); Honerkamp, Martin, 49205 Hasbergen (DE); Peters, Thorsten, 26810 Westoverledingen (DE); Ruloffs, Frank-Winfried, 28844 Weyhe (DE); Vanderschot, Sven, 26384 Wilhelmshaven (DE); Wedermann, Jörg, 26340 Zetel (DE)
(74) Vertreter: Jabbusch, Matthias

(57) **Zusammenfassung**

Bei einem Verfahren zum Anschließen eines Gebäudes an ein Glasfasernetz bei dem ausgehend von einem Glasfaserkabel eine Glasfaserabzweigung zu dem Grundstück des anzuschließenden Gebäudes gelegt wurde, wird außerhalb des anzuschließenden Gebäudes an die Glasfaserabzweigung ein Medienkonverter angeschlossen. Zwischen dem Medienkonverter und dem Gebäude wird ein Power-Over-Ethernet fähiges Daten-Kabel verlegt und in dem Gebäude dort mit einem Power-Over-Ethernet fähigen Gerät verbunden. Auf diese Weise kann eine kostengünstige Anbindung von Gebäuden an das Glasfasernetz erfolgen.

## Beschreibung

Die Erfindung betrifft ein Verfahren zum Anschließen eines Gebäudes an ein Glasfasernetz bei dem ausgehend von einem Glasfaserkabel eine Glasfaserabzweigung zu dem Grundstück des anzuschließenden Gebäudes gelegt wurde. Weiterhin betrifft die Erfindung einen Anschluss eines Gebäudes an ein Glasfasernetz, bei dem ausgehend von einem Glasfaserkabel eine Glasfaserabzweigung auf das Grundstück des anzuschließenden Gebäudes führt.

Zur Erhöhung der Übertragungsgeschwindigkeit in der Datenkommunikation werden verstärkt Glasfasernetze verlegt. Problematisch ist insbesondere die sogenannte "letzte Meile", nämlich der Anschluss der Gebäude, da dieses einen vergleichsweise hohen Kosten- und Organisationsaufwand verursacht, da dazu die Glasfaserkabel meist in Gräben oder Rohren zu dem Gebäude verlegt werden.

Im Artikel "Glasfasernetz" auf Wikipedia (https://de.wikipedia.org/wiki/Glasfasernetz, abgerufen am 18.02.2019) werden dabei folgende Anschlussarten unterschieden:
FTTN (fibre to the node/curb/street): Darunter wird das Verlegen von Glasfaserkabeln bis zum nächsten Verteiler, dem Kabelverzweiger, bezeichnet. Hier werden also entsprechend die sogenannten Hauptkabel von Kupfer auf Glasfaser hochgerüstet.
FTTdp (fibre to the distribution point): Darunter versteht man die Glasfaserverkabelung bis zu der Kabelstange bzw. zum Kabelschacht in der Straße. Damit werden die Kupfer-Leitungslängen noch weiter verkürzt als bei FTTN beziehungsweise FTTC (fibre to the curb).
FTTB (fibre to the basement oder fibre to the building): Damit wird das Verlegen von Glasfaserkabeln bis in ein Gebäude bezeichnet. Dabei werden Lichtwellenleiter beispielsweise bis in die Hauskeller verlegt. Dazu werden entweder neue Tiefbauarbeiten durchgeführt oder Lichtwellenleiter über vorhandene Rohre wie beispielsweise Gas- oder Wasseranschlüsse zum Keller des Gebäudes geführt. Dies ist derzeit eine besonders häufig praktizierte Hausanschlusstechnik, die jedoch in Abhängigkeit von der Grundstücksgröße relativ hohe Kosten allein für die Tiefbauarbeiten verursacht und auch einen vergleichsweise hohen Organisationsaufwand für die Koordinierung der Arbeiten erfordert.
FTTL (fibre to the loop): Dieses Verfahren beschreibt das Verlegen bis zum Teilnehmer.
Dies ist vergleichbar mit FTTH (fibre to the home), bei dem die Lichtwellenleiter in das Gebäude oder in die Wohnung verlegt werden.
FTTD (fibre to the desk): Damit wird die Netzwerkverkabelung bis zum Schreibtisch bezeichnet. Dies ist der Idealfall des Glasfaseranschlusses bis unmittelbar zum ausführenden Geräts.

Ein Beispiel für einen FTTH-Anschluss ist in der EP 2 729 836 B1 beschrieben.

Die Wahl des Anschlusses ist jeweils ein Kompromiss zwischen den gerade für die "letzte Meile" des Glasfaseranschlusses entstehenden Kosten und den erwarteten Verbesserungen bei der Datenkommunikation durch möglichst weitgehende Glasfaserverkabelung.

Der Erfindung liegt die Aufgabe zugrunde, ein Verfahren zum Anschließen eines Gebäudes an ein Glasfasernetz der eingangs genannten Art zu schaffen, das besonders einfach und kostengünstig ausführbar ist und dabei gleichzeitig eine gute Datenkommunikation ermöglicht.

Die Lösung dieser Aufgabe erfolgt mit einem Verfahren mit den Merkmalen des Patentanspruchs 1 und mit einem Anschluss mit den Merkmalen des Patentanspruchs 12. Bevorzugte Weiterbildungen der Erfindung sind in den Unteransprüchen beschrieben.

Bei einem Verfahren zum Anschließen eines Gebäudes an ein Glasfasernetz bei dem ausgehend von einem Glasfaserkabel eine Glasfaserabzweigung zu dem Grundstück des anzuschließenden Gebäudes gelegt wurde, ist erfindungswesentlich vorgesehen, dass außerhalb des anzuschließenden Gebäudes an die Glasfaserabzweigung ein Medienkonverter angeschlossen wird, und dass zwischen dem Medienkonverter und dem Inneren des Gebäudes ein Power-Over-Ethernet fähiges Daten-Kabel verlegt wird und in dem Gebäude mit einem Power-Over-Ethernet fähigen Gerät verbunden wird.

Bevorzugt ist dabei die Verlegerichtung die, dass an der Glasfaserabzweigung der Medienkonverter angeschlossen wird und ausgehend von dem Medienkonverter das Daten-Kabel in das Gebäude verlegt wird und dort mit dem Power-Over-Ethernet fähigen Gerät verbunden wird. In einer alternativen Ausführungsform kann das Daten-Kabel auch zunächst aus dem Gebäude heraus geführt und zu dem Medienkonverter verlegt werden. Es sind also beide Verlegerichtungen möglich und im Rahmen der Erfindung erfasst.

Auf diese Weise kann besonders kostengünstig die Anbindung von Gebäuden an das Glasfasernetz erfolgen. Insbesondere müssen keine Gräben mehr von der Grundstücksgrenze zum Gebäude gegraben und keine Hauseinlässe in den Keller des Gebäudes gebohrt und nach der Verlegung abgedichtet werden. Auch die Zeit, die für die Herstellung des Hausanschlusses erforderlich ist, wird deutlich gesenkt, da die genannten aufwendigen Arbeiten entfallen und auch keine Zeit für die Koordinierung dieser Arbeiten aufgewendet werden muss. Auch die Verlegung des Daten-Kabels ist besonders einfach möglich. Dieses kann auch von Elektrikern oder Laien durchgeführt werden. Bei Verwendung eines Flach-Kabels kann das Daten-Kabel über die Hausfassade auch durch ein Fenster verlegt werden. Durch diese Anschlussart wird auch die Verlegung von Glasfasern innerhalb des Hauses vermieden. Diese Art des Anschlusses ermöglicht auch die freie Wahl des Routers im Haus und auch der Hausübergabepunkt kann flexibel verlegt werden. Gebäudeseitig ist das Daten-Kabel mit einem Power-Over-Ethernet fähigen Gerät zu verbinden. Dies kann ein entsprechend ausgestatteter Router oder ein Power-Over-Ethernet-Injector sein.

Das Glasfaserkabel, das in dem erfindungsgemäßen Verfahren beschrieben wird, ist Bestandteil des Lichtwellen-Access-Netzes des Kommunikationsnetzes. Ausgehend von solchen Glasfaserkabeln werden Glasfaserabzweigungen zu den Grundstücken der anzuschließenden Gebäude gelegt. Diese Glasfaserabzweigungen können entweder unmittelbar an den Hauptglasfaserkabeln abzweigen oder über Zwischenstufen mit kleiner werdenden Glasfaserkabeln abgezweigt werden. Auch können ausgehend von Hauptglasfaserkabeln Mikroröhrchen-Systeme bis zu einem Grundstück verlegt sein, in denen die Glasfaserabzweigungen eingeführt werden. Insgesamt wird mit dem erfindungsgemäßen Verfahren eine neue Anschlussmöglichkeit geschaffen, die zwischen den eingangs aufgeführten Lösungen FTTdp und FTTB liegen. Man könnte dieses Verfahren auch als FTTre (fibre to the real estate) bezeichnen. Der Medienkonverter wird auch als ONT, also als Optical Network Termination bezeichnet. Mit einem solchen Medienkonverter werden die über das Glasfaserkabel übertragenen Lichtsignale in elektrische Signale umgewandelt und können dann über das Daten-Kabel übertragen werden bzw. in Rückrichtung die über das Daten-Kabel übertragenen elektrischen Signale in optische Signale umgewandelt werden und über die Glasfaser übertragen werden. Da der Medienkonverter eine Energieversorgung benötigt, wird erfindungsgemäß der Medienkonverter an ein Power-Over-Ethernet fähiges Daten-Kabel angeschlossen, über das einerseits Daten übertragen werden und andererseits gleichzeitig eine Stromversorgung bereitgestellt wird, mit der der Medienkonverter betrieben wird.

In einer bevorzugten Ausgestaltung der Erfindung wird die Glasfaserabzweigung unterirdisch oder überirdisch auf die Grundstücksgrenze des anzuschließenden Gebäudes gelegt. Die Position, an der die Glasfaserabzweigung auf die Grundstücksgrenze trifft, kann auch als "Terminierungspunkt" bezeichnet werden. Dies ist besonders bevorzugt, da die Versorgungsunternehmen und/oder Telekommunikationsunternehmen vom öffentlichen Grund aus die Glasfaserabzweigung an die Grundstücksgrenze legen können. Dazu sind vergleichsweise wenige bürokratische Schritte notwendig, da dies soweit ohne Einwilligung des Grundstückseigentümers möglich ist. Die Glasfaserabzweigung kann dabei entweder unterirdisch oder überirdisch auf die Grundstücksgrenze gelegt werden.

Bevorzugt wird die Glasfaserabzweigung innerhalb eines Rohrsystems oder eines Mikroröhrchensystems hergestellt, das bis auf die Grundstücksgrenze des anzuschließen Gebäudes beziehungsweise zum Terminierungspunkt gelegt wurde.

Bei sehr großen Grundstücken, bei denen die Entfernung zwischen der Grundstücksgrenze und dem Gebäude eine bestimmte Grenze, beispielsweise 100 m überschreitet, kann es günstig sein, die Glasfaserabzweigung bis auf das Grundstück selbst zu legen, um den Abstand zwischen der Glasfaserabzweigung und dem anzuschließenden Gebäude unterhalb einer bestimmten Länge, insbesondere unter 100 m zu halten, da das erfindungsgemäße Verfahren nicht für beliebig lange Anschlussstrecken geeignet ist.

In einer bevorzugten Ausführungsform der Erfindung wird der Medienkonverter unmittelbar an der Grundstücksgrenze, insbesondere in der Nähe des Terminierungspunktes, installiert. Dadurch besteht bei unmittelbarer Grenzinstallation auch die Möglichkeit, dass das Versorgungsunternehmen den Medienkonverter ohne Zugang auf das Grundstück selbst warten oder eventuell austauschen kann.

In einer besonders bevorzugten Ausgestaltung der Erfindung ist der Medienkonverter in einem abgeschlossenen Gehäuse installiert. Bevorzugt ist dieses zumindest teilweise unterirdisch und zum Teil oberirdisch installiert. Alternativ kann das Gehäuse auch vollständig unterirdisch oder vollständig oberirdisch installiert sein. In das Gehäuse wird die Glasfaserabzweigung beziehungsweise das Röhrchen oder Mikroröhrchen eingeführt. Das Gehäuse ist bevorzugt abschließbar, lässt sich also bevorzugt nur mit einem Schlüssel öffnen. Dies kann ein mechanischer oder ein elektronischer Schlüssel sein.

In einer weiteren bevorzugten Ausführungsform der Erfindung wird als Power-Over-Ethernet fähiges Datenkabel ein LAN-Kabel, vorzugsweise ein LAN-Kabel der Kategorie 6e oder höher verwendet. Insbesondere wird ein LAN-Kabel der Kategorie 7 verwendet, da dieses Übertragungsraten von bis zu 10 Gbit/s ermöglicht. Bevorzugt wird ein Kupfer-LAN-Datenkabel verwendet.

In einer anderen bevorzugten Ausgestaltung der Erfindung wird die Glasfaserabzweigung mit einem Spleiß mittels eines Pigtails an den Medienkonverter angeschlossen.

Die Verbindung zwischen dem Medienkonverter und dem Gebäude erfolgt bevorzugt durch ein überirdisch verlegtes Power-Over-Ethernet fähiges Daten-Kabel. Dazu wird bevorzugt ein speziell für den Einsatz im Außenbereich konzipiertes Daten-Kabel verwendet. Bevorzugt wird ein Flach-Patch-Kabel verwendet.

In einer anderen bevorzugten Ausführungsform wird das Power-Over-Ethernet fähige Daten-Kabel unterirdisch verlegt. Dazu wird bevorzugt ein speziell für eine direkte oder indirekte Erdverlegung konzipiertes Daten-Kabel verlegt. Weiterhin kann das Daten-Kabel bevorzugt in einem Schutzrohr verlegt werden.

In einer Weiterbildung der Erfindung werden bei Anschluss eines Gebäudes für mehrere Parteien mehrere Medienkonverter aufgestellt und an jedem Medienkonverter ein Power-Over-Ethernet fähiges Daten-Kabel in das Gebäude beziehungsweise in den jeweiligen Gebäudebereich einer jeweiligen Partei geführt.

Ein weiterer Aspekt der Erfindung betrifft den Anschluss eines Gebäudes an ein Glasfasernetz, bei dem ausgehend von einem Glasfaserkabel eine Glasfaserabzweigung auf das Grundstück des anzuschließenden Gebäudes führt, wobei erfindungsgemäß vorgesehen ist, dass außerhalb des anzuschließenden Gebäudes die Glasfaserabzweigung an einen Medienkonverter angeschlossen ist und dass der Medienkonverter mit einem Power-Over-Ethernet fähigen Daten-Kabel mit einem Power-Over-Ethernet fähigem Gerät (Injector-Funktion) verbunden ist, wobei das Power-Over-Ethernet fähige Gerät in dem Gebäude angeordnet ist.

Bevorzugt ist der Medienkonverter dabei an der Grundstücksgrenze platziert. Besonders bevorzugt ist der Medienkonverter in unmittelbarer Nähe des sogenannten Terminierungspunktes platziert. Als Terminierungspunkt wird die Position bezeichnet, an der die Glasfaserabzweigung auf die Grundstücksgrenze trifft.

In einer bevorzugten Ausführungsform ist das Power-Over-Ethernet fähige Daten-Kabel ein Twisted-Pair Kabel mindestens der Kategorie 6e oder größer. Besonders bevorzugt ist es ein LAN-Kabel der Kategorie 7.

Mit derartigen Kabeln können besonders hohe Datenmengen übertragen werden. Gleichzeitig kann über das Power-Over-Ethernet fähige Daten-Kabel auch eine Energieversorgung des Medienkonverters vom Gebäude aus vorgenommen werden.

In einer bevorzugten Ausführungsform der Erfindung sind an der Grundstücksgrenze mehrere Medienkonverter aufgestellt und von jedem Medienkonverter geht ein Power-Over-Ethernet fähiges Daten-Kabel in verschiedene Gebäudebereiche, die einer jeweiligen Partei eines Mehrparteiengebäudes zugeordnet sind. Auf diese Weise lassen sich auch Mehrparteiengebäude erfindungsgemäß versorgen.

Nachfolgend wird die Erfindung anhand eines in der Zeichnung dargestellten Ausführungsbeispiels weiter erläutert. Es zeigen:
- Fig. 1:: eine schematische Darstellung des Anschlusses eines Gebäudes an das Glasfasernetz;
- Fig. 2:: eine schematische Darstellung eines verbauten Medienkonverters im Rahmen der Erfindung.

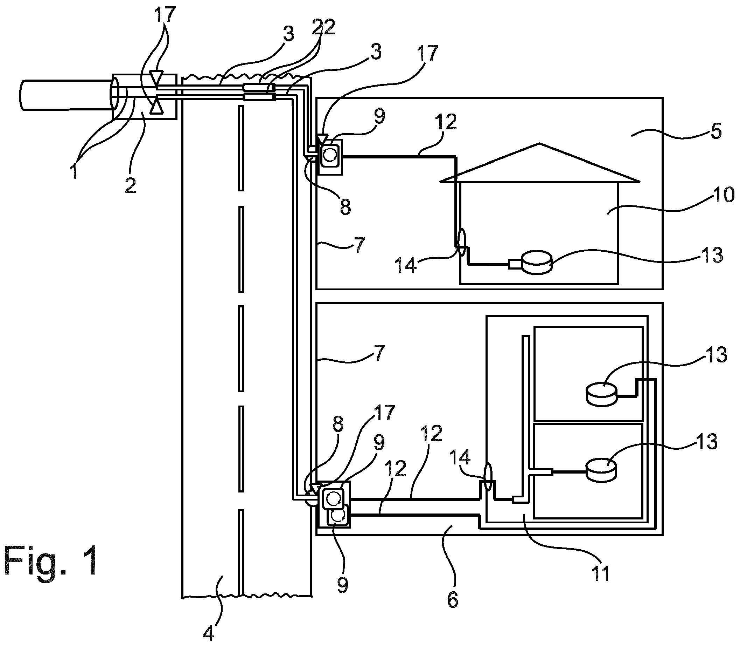

In Figur 1 ist schematisch der Anschluss eines Gebäudes an ein Glasfasernetz dargestellt. Im Öffentlichen Grund 4 verlegte Glasfaserkabel 1 werden ausgehend von sogenannten Verteilerschränken 2 bis in den Bereich von anzuschließenden Gebäuden verlegt und von dort werden Glasfaserabzweigungen 3 zu den Grundstücken 5, 6 der anzuschließenden Gebäude 10 beziehungsweise der Mehrparteiengebäude 11 geführt. Die Glasfaserabzweigungen 3, die auch in Mikroröhrchen 22 verlegt sein können, werden bis an die Grundstücksgrenzen 7 der Grundstücke 5 und 6 geführt. Der Treffpunkt wird auch als Terminierungspunkt 8 bezeichnet. Bis dahin kann von den Telekommunikationsunternehmen oder Versorgungsunternehmen der Glasfaseranschluss im öffentlichen Bereich erstellt werden. Auf dem anzuschließenden Grundstück, insbesondere unmittelbar an der Grundstücksgrenze 7 und am Terminierungspunkt 8 werden dann Medienkonverter 9 platziert, die an die Glasfaserabzweigung 3 angeschlossen werden. In den Medienkonvertern 9 wird das aus Richtung Lichtwellen-Access-Netz des Kommunikationsnetzes über die Lichtwellenleiter der Glasfaserabzweigung 3 geleitete optische Signal in ein elektrisches Signal umgewandelt und das vom Daten-Kabel 12 kommende elektrische Signal in ein optisches Signal gewandelt und über die Glasfaserabzweigung 3 und die Glasfaser 1 in Richtung Lichtwellen-Access-Netzes des Kommunikationsnetzes geleitet. Das vom Medienkonverter 9 erzeugte elektrische Signal wird dann mithilfe eines einfach zu verlegenden Daten-Kabels 12 in das Gebäude 10 geführt. Das Daten-Kabel 12 wird in dem Gebäude 10 an ein Power-Over-Ethernet fähiges Gerät 13 angeschlossen beziehungsweise ist dort mit diesem verbunden. Dieses Gerät kann beispielsweise ein Router sein, der in der Lage ist, über das Daten-Kabel, das insbesondere ein LAN-Kabel ist, einerseits Daten zu transportieren und andererseits elektrische Energie zum Betrieb des Medienkonverters 9 bereitzustellen. Diese Anschlussmöglichkeit ist ohne weiteres für Daten-Kabel 12 mit einer Länge bis zu 100 m Länge möglich. Auf dem Grundstück 6 ist ein Gebäude 11 mit mehreren Parteien vorhanden. Hier sind mehrere Medienkonverter 9, nämlich für jede Partei ein Medienkonverter platziert. Jeder Medienkonverter 9 ist über ein Daten-Kabel 12 zu einer zugehörigen Partei geführt und dort an ein Power-Over-Ethernet fähiges Gerät 13 angeschlossen. Bei Verwendung von Flach-Kabeln, insbesondere Flach-Patch-Kabeln, kann dieses auch einfach über die Gebäudefassade durch ein Fenster oder andere Öffnungen 14 in das Gebäude 10, 11 geführt werden. Das Power-Over-Ethernet fähige Gerät 13 kann ein Router oder ein Power-Over-Ethernet-Injector sein.

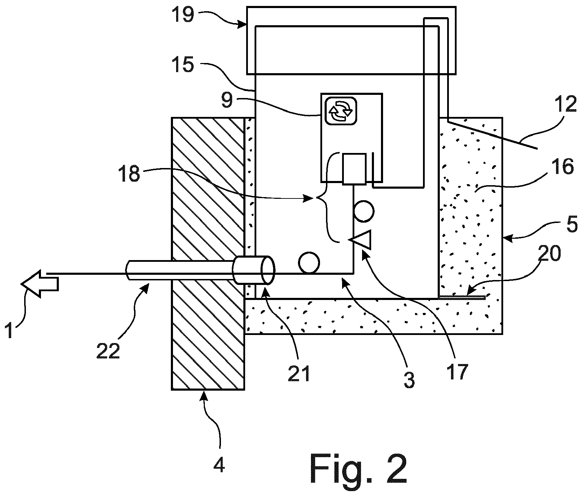

In Figur 2 ist ein Querschnitt durch ein Gehäuse 15 mit einem Medienkonverter 9 dargestellt. Das Gehäuse 15 ist hier zu etwas mehr als der Hälfte im Erdreich 16 versenkt und wird vom Öffentlichen Grund 4 mit der Glasfaserabzweigung 3 angeschlossen. Die Glasfaserabzweigung 3 wird mithilfe eines Mikroröhrchens 22 und einer Durchführung 21, die gegenüber dem Gehäuse 15 einen abgedichteten Einlass für die Glasfaserabzweigung 3 bereitstellt, in das Gehäuse 15 eingeführt. Dieser Anschluss kann von der Seite oder auch von unten in das Gehäuse 15 erfolgen. In der Figur 2 ist auch gut zu erkennen, dass das Gehäuse 15 mit dem Medienkonverter 9 auf dem anzuschließenden Grundstück 5, jedoch in unmittelbarer Nähe zum Öffentlichen Grund 4 angeordnet ist, also unmittelbar benachbart ist, so dass im Idealfall ein Zugriff auf den Medienkonverter 9 in dem Gehäuse 15 vom Öffentlichen Grund 4 aus erfolgen kann. Das Gehäuse 15 ist mit einem Aufschwämmschutz 20 im Erdreich 16 gesichert. Die Glasfaserabzweigung 3 ist im Gehäuse 15 mit einem Spleiß 17 mittels eines Pigtails 18 an den Medienkonverter 9 angeschlossen. In dem Medienkonverter 9 wird das optische Signal des Lichtwellenleiters aus der Glasfaserabzweigung 3 in ein elektrisches Signal umgewandelt und über das Daten-Kabel 12 aus dem Gehäuse 15 zum Gebäude geführt. In der Rückrichtung wird das elektrische Signal vom Daten-Kabel 12 kommend durch den Medienkonverter 9 in ein optisches Signal umgewandelt und über die Glasfaserabzweigung 3 in Richtung des Glasfaserkabels 1 übertragen. Das Gehäuse 15 weist hier eine verschließbare Kappe 19 auf, in dessen Bereich der Auslass für das Daten-Kabel 12 vorgesehen ist. Die Kappe 19 ist verriegelt und verschließbar an dem Gehäuse 15 befestigt, so dass die Öffnung des Gehäuses 15 nur durch autorisierte Personen erfolgen kann und der Medienkonverter 9 dadurch gegen Vandalismus und unbefugte Eingriffe geschützt ist. Das Daten-Kabel 12 kann je nach gewünschter Verlegung zur oberirdischen oder zur unterirdischen Verlegung ausgebildet sein und im einfachsten Fall durch einfaches Ausrollen zum Gebäude geführt werden.

## Patentansprüche

1. Verfahren zum Anschließen eines Gebäudes (10, 11) an ein Glasfasernetz bei dem ausgehend von einem Glasfaserkabel (1) eine Glasfaserabzweigung (3) zu dem Grundstück (5, 6) des anzuschließenden Gebäudes (10, 11) gelegt wurde,
**dadurch gekennzeichnet,**
**dass** außerhalb des anzuschließenden Gebäudes (10, 11) an die Glasfaserabzweigung (3) ein Medienkonverter (9) angeschlossen wird,
**dass** zwischen dem Medienkonverter (9) und dem Inneren des Gebäudes (10, 11) ein Power-Over-Ethernet fähiges Daten-Kabel (12) verlegt wird, und in dem Gebäude (10, 11) mit einem Power-Over-Ethernet fähigen Gerät (13) verbunden wird.

2. Verfahren nach Anspruch 1, **dadurch gekennzeichnet, dass** die Glasfaserabzweigung (3) unterirdisch oder überirdisch auf die Grundstücksgrenze (7) angrenzend an den Öffentlichen Grund (4) des anzuschließenden Gebäudes (10, 11) gelegt wurde.

3. Verfahren nach Anspruch 1 oder 2, **dadurch gekennzeichnet, dass** die Glasfaserabzweigung (3) innerhalb eines Rohrsystems oder eines Mikroröhrchen-Systems (22) hergestellt wurde, das bis auf die Grundstücksgrenze (7) angrenzend an den Öffentlichen Grund (4) des anzuschließenden Gebäudes (10, 11) gelegt wurde.

4. Verfahren nach einem der vorhergehenden Ansprüche, **dadurch gekennzeichnet, dass** der Medienkonverter (9) auf dem Grundstück (5, 6) in der Nähe der Grundstücksgrenze (7) angrenzend an den Öffentlichen Grund (4) installiert wird.

5. Verfahren nach einem der vorhergehenden Ansprüche, **dadurch gekennzeichnet, dass** der Medienkonverter (9) in einem abgeschlossenen, abgedichteten Gehäuse (15) installiert wird.

6. Verfahren nach Anspruch 4 oder 5, **dadurch gekennzeichnet, dass** das Daten-Kabel (12) ein Kupfer-LAN-Daten-Kabel ist.

7. Verfahren nach einem der vorhergehenden Ansprüche, **dadurch gekennzeichnet, dass** als Power-Over-Ethernet fähiges Daten-Kabel (12) ein LAN-Kabel der Kategorie 6e oder höher verwendet wird.

8. Verfahren nach einem der vorhergehenden Ansprüche, **dadurch gekennzeichnet, dass** die Glasfaserabzweigung (3) mit einem Spleiß (17) mittels eines Pigtails (18) an den Medienkonverter (9) angeschlossen wird.

9. Verfahren nach einem der vorhergehenden Ansprüche, **dadurch gekennzeichnet, dass** das Power-Over-Ethernet fähige Daten-Kabel (12) überirdisch zum Gebäude (10, 11) verlegt wird.

10. Verfahren nach einem der Ansprüche 1 bis 8 **dadurch gekennzeichnet, dass** das Power-Over-Ethernet fähige Daten-Kabel (12) unterirdisch zum Gebäude (10, 11) verlegt wird.

11. Verfahren nach einem der vorhergehenden Ansprüche, **dadurch gekennzeichnet, dass** bei Anschluss eines Gebäudes (10, 11) für mehrere Parteien mehrere Medienkonverter (9) aufgestellt und an jedem Medienkonverter (9) ein Power-Over-Ethernet fähiges Daten-Kabel (12) in das Gebäude (11) bzw. in den jeweiligen Gebäudebereich einer jeweiligen Partei geführt wird.

12. Anschluss eines Gebäudes (10, 11) an ein Glasfasernetz, bei dem ausgehend von einem Glasfaserkabel (1) eine Glasfaserabzweigung (3) auf das Grundstück (5, 6) des anzuschließenden Gebäudes (10, 11) führt, die Position, an der die Glasfaserabzweigung (3) auf die Grundstücksgrenze (7) trifft, wird im Folgenden als Terminierungspunkt bezeichnet,
**dadurch gekennzeichnet,**
**dass** außerhalb des anzuschließenden Gebäudes (10, 11) die Glasfaserabzweigung (3) an einen Medienkonverter (9) angeschlossen ist, dass der Medienkonverter (9) mit einem Power-Over-Ethernet fähigen Daten-Kabel (12) mit einem Power-Over-Ethernet fähigem Geräte (13) verbunden ist, wobei sich das Power-Over-Ethernet fähige Gerät (13) in dem Gebäude (10, 11) befindet.

13. Anschluss nach Anspruch 12, **dadurch gekennzeichnet, dass** der Medienkonverter (9) an der Grundstücksgrenze (7) angrenzend an den Öffentlichen Grund (4), in unmittelbarer Nähe des Terminierungspunkts (8), platziert ist.

14. Anschluss nach Anspruch 11 oder 12, **dadurch gekennzeichnet, dass** das Power-Over-Ethernet fähige Daten-Kabel (12) ein Twisted-Pair Kabel mindestens der Kategorie 6e oder größer ist.

15. Anschluss nach einem der Ansprüche 10 bis 13, **dadurch gekennzeichnet, dass** an der Grundstücksgrenze (7) angrenzend an den Öffentlichen Grund (4) mehrere Medienkonverter (9) aufgestellt sind und von jedem Medienkonverter (9) ein Power-Over-Ethernet fähiges Daten-Kabel (12) in verschiedene Gebäudebereiche einer jeweiligen Partei eines Mehrparteiengebäudes (11) geführt sind.

16. Anschluss nach einem der Ansprüche 12 bis 15, **dadurch gekennzeichnet, dass** der Medienkonverter (9) in einem abschließbaren Gehäuse (15) angeordnet ist.
